(19)

Europäisches
Patentamt
European
Patent Office
Office européen
des brevets

(11) **EP 4 357 970 A1**

(12) **EUROPEAN PATENT APPLICATION**

(43) Date of publication:
   **24.04.2024  Bulletin 2024/17**

(21) Application number: **22382997.9**

(22) Date of filing: **18.10.2022**

(51) International Patent Classification (IPC):
   **G06K 19/077** (2006.01)

(52) Cooperative Patent Classification (CPC):
   **G06K 19/07749; G06K 19/077**

(84) Designated Contracting States:
   **AL AT BE BG CH CY CZ DE DK EE ES FI FR GB GR HR HU IE IS IT LI LT LU LV MC ME MK MT NL NO PL PT RO RS SE SI SK SM TR**
   Designated Extension States:
   **BA**
   Designated Validation States:
   **KH MA MD TN**

(71) Applicant: **Giesecke+Devrient ePayments GmbH 81677 München (DE)**

(72) Inventor: **FERNANDEZ LOPEZ, Oscar Miguel E-08820 El Prat de Llobregat (Barcelona) (ES)**

(74) Representative: **Giesecke+Devrient IP Prinzregentenstraße 161 81677 München (DE)**

(54) **INTEGRATED-CIRCUIT CARD WITH ANTENNA ARRANGEMENT**

(57)    Exemplary embodiments of an integrated-circuit card are provided. The integrated-circuit card comprises a plurality of layers, forming a card body, the card body having a first half side and a second half side separated by a transversal axis, an antenna having an antenna body and two end points, the antenna being embedded within the card body, and a microchip embedded within one of the plurality of layers and connected to the antenna through the two end points. The microchip and the antenna are located within the same half side of the integrated-circuit card.

Fig. 3a

EP 4 357 970 A1

**Description**

The disclosure relates generally to smart cards, and more specifically but not exclusively, to integrated-circuit cards having a chip module and an antenna.

BACKGROUND OF THE INVENTION

Smart cards have been used throughout the world in a variety of applications. A smart card is a card with an embedded integrated circuit (IC), often referred to as a chip, microchip or microprocessor. Used for products such as credit and debit cards, transport cards, SIM cards, identifications cards etc., the embedded IC provides data storage, additional security and functionality. A smart card is also referred to as a universal integrated-circuit card/integrated SIM (UICC/iUICC/iSIM).

A dual interface chip card is a smart card with a single embedded chip that allows the card to be used in both contact and contactless transactions. For supporting contactless communication, the smart card is equipped with an RFID or NFC microchip that enables it to obtain the card's identifying information and make payments through radio-frequency identification (RFID) or near-field communication (NFC) technologies. Further, the smart card has a typically invisible antenna embedded in the card body, to be coupled electromagnetically with a contactless card-reader device. The antenna is used to receive power from the terminal to the chip on the card and to wireless transmit data between the chip and the terminal.

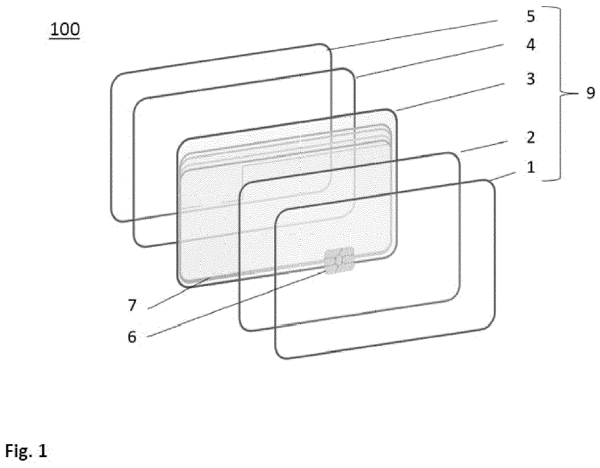

FIG. 1 shows the components of a typical dual-interface card. The dual-interface card 100 comprises a plurality of layers 1 to 5 forming the card body 9. The layers 1 to 5 generally consist of a rigid carrier made of plastic, such as PVC, PVC-ABS blend, PET or polycarbonate type, into which the chip 6 and the antenna 7 are integrated. The antenna 7 may be printed on (or etched from) an inlay foil that is laminated between two card body layers. After lamination the antenna is thus melted with the PVC body. Specifically, the antenna is arranged within most of the surface of a layer (such as layer 3 in Fig. 1). Although there are some variations in the antenna geometry, for most of the cards, the antenna windings span across the whole card. The chip module 6 is either added before lamination (contactless-only cards) by gluing, welding or soldering it to the antenna or after lamination (contact + contactless dual interface cards) by gluing it into a hole that was cut out of the card body with a mill.

When a smart card is getting out of use, it is usually destroyed, e.g., by shredding or burning. Due to the high plastic content of such cards a more environment friendly solution is to separate the non-plastic components and to recycle the plastic part. Chip modules can be separated from the card, for example with the help of a manual punching tool. However, the antenna being melted with the PVC body and being located across a large area of the card, cannot be separated from the card, and hence, the card body cannot be easily recycled even after the chip has been removed.

It is therefore desirable to provide a solution which addresses the above shortcomings for facilitating a separation of plastic from non-plastic components of a dual-interface card for an environment-friendly recycling process.

SUMMARY OF THE INVENTION

The present invention addresses the above object by the subject-matter covered by the independent claims. Preferred embodiments of the invention are defined in the dependent claims.

According to a first aspect of the present invention, there is provided an integrated-circuit card comprising a plurality of layers, forming a card body, the card body having a first half side and a second half side separated by a transversal axis, an antenna having an antenna body and two end points, the antenna being embedded within the card body, and a microchip embedded within one of the plurality of layers and connected to the antenna through the two end points. The microchip and the antenna are located within the same half side of the integrated-circuit card.

The dimensions and position of the microchip on the integrated-circuit card is normed in ISO 7816 and thus fixed. By arranging the antenna on the same half side of the integrated circuit card, the size of the card body area containing the microchip and the antenna (i.e., mixed materials of plastic and non-plastic) is thus reduced. This part can be entirely removed from the card body, facilitating thus a separation of non-plastic and plastic card components for an environment-friendly recycling process.

Throughout the following description, the expression center of the antenna denotes the center point of a surface, such as a rectangular surface, covering or enclosing the antenna body.

In some embodiments of the present invention, a center $O1$ of the antenna is located within a distance $d1$ from a center, $O2$, of the microchip, $d1$ being measured in the longitudinal direction of the card body, wherein $d1$ is smaller than half of a distance between the center $O2$ of the microchip and a center $O3$ of the card body.

This ensure an arrangement of the antenna in close proximity to the microchip.

Preferably, the distance $d1$ is less than half of a length of the microchip. With this arrangement the center of the antenna falls within the microchip surface.

By arranging the antenna such that its center falls within the surface of the microchip, an even closer placement of the antenna to the chip module is achieved, reducing further the area of mixed materials that can be removed when the card is discarded.

In some embodiments of the present invention, the center of the antenna is located on the right side of the microchip towards the middle of the card body.

This arrangement allows to use a larger antenna, with a width extending over the width of the microchip towards the middle of the card body, while still keeping the area of mixed materials on the card body small.

In some embodiments of the present invention, the center O1 of the antenna is located in a transversal direction within a distance d2 from the center O2 of the microchip, wherein d2 is smaller than half of the width of the card body.

This allows to position the antenna with a transversal displacement with respect to the microchip location, that is, the antenna can be placed in an orientation perpendicular to the microchip.

Preferably, d2 is less than half of a width of the microchip, allowing thus to place the antenna closer to the microchip.

In some embodiments of the present invention, the antenna has a length L1 and a width W1, wherein L1 and W1 are values between a length L2 respectively a width W2 of the microchip and the length L2 respectively the width W2 of the microchip multiplied by a factor k, that is, $L2 \leq L1 \leq k \times L2$ and $W2 \leq W1 \leq k \times W2$, preferably k being a rational number $1 < k \leq 2$.

An antenna with such a geometry provides good results in terms of RF performance. A preferred antenna size with good RF performance has a length of 30 mm and a width of 15 mm.

In some embodiments of the present invention, the microchip is located within one of the upper layers of the card body, and the antenna is located within a layer of the card body behind the layer containing the microchip.

In some embodiments of the present invention, the antenna body comprises a loop arranged around the microchip and comprising a plurality of coils or wires.

In a preferred embodiment, the antenna loop comprises straight portions substantially parallel to edges of the microchip, and curved portions connecting the straight portions and located around corners of the microchip.

The symmetric structure of the antenna arrangement improves the surface current and the magnetic field detected or generated by the antenna.

In some embodiments of the present invention, the antenna is made of copper wire.

In some embodiments of the present invention, the antenna is a printed-circuit-board antenna. Preferably, the antenna is a flexible printed circuit antenna.

A flexible printed circuit antenna can be arranged in space-saving manner in close proximity to the microchip, reducing further the area with mixed material on the integrated-circuit card.

In some embodiments of the present invention, the card body comprises a marking located around an area of the card body that comprises the microchip and the antenna, the area being detachable from the remaining surface of the integrated-circuit card along the marking.

Preferably, the marking is realized as a structural break-off line through at least one layer of the card body.

This provide for easily removing the area of the card containing non-plastic materials, for instance by pressing with the thumb or punching with a punching tool.

According to a second aspect of the present invention, there is provided a method for manufacturing an integrated-circuit card embedded with a microchip and an antenna. In a step, a plurality of layers is laminated together with an antenna carrier substrate comprising the antenna, to form a card body, wherein the carrier substrate is placed between two layers such that the antenna is located within a first area of the card body. In a step, the microchip is attached to the card body within a second area of the card body, wherein the first area and the second area are on a same half side selected from a first half side and a second half side separated by a transversal axis of the integrated-circuit card..

Further aspects, features and advantages of the present invention will become apparent to those of ordinary skills in the art upon reviewing the following detailed description of preferred embodiments and variants of the present invention in conjunction with the accompanying figures.

BRIEF DESCRIPTION OF THE DRAWINGS

Reference will now be made to the accompanying figures, in which:

FIG. 1 is a schematic and exploded depiction in perspective of a dual-interface card;

FIG. 2 shows several views of a dual-interface card, according to embodiments of the invention. Notably:

FIG. 2a is a schematic and exploded depiction in perspective of a dual-interface card according to an embodiment of the invention;

FIG. 2b is a schematic view from the top showing the arrangement of the microchip and antenna on an integrated-circuit card according to an embodiment of the invention;

FIG. 2c is a schematic and exploded depiction in perspective of the card area comprising the microchip and antenna according to an embodiment of the invention;

FIG. 2d is an enlarged view of a cut-out through the integrated-circuit card of FIG. 2b along the viewing line A-A, according to an embodiment of the invention;

FIG. 3 shows various arrangements of the microchip and antenna on an integrated-circuit card in a schematic view, according to embodiments of the invention. Notably:

FIG. 3a is a schematic view from the top showing a longitudinal arrangement of the antenna with respect to the microchip;

FIG. 3b is a schematic view from the top showing a transversal arrangement of the antenna with respect to the microchip;

FIG. 3c is a schematic view from the top showing an arrangement of the antenna with both a longitudinal and a transversal displacement with respect to the microchip;

FIG. 4. is a schematic view illustrating the removal of the card area containing the antenna and the microchip from the integrated-circuit card, according to an embodiment of the invention.

DETAILED DESCRIPTION

Detailed explanations of the present invention are given below with reference to attached drawings that illustrate specific embodiment examples of the present invention. These embodiments are described in sufficient detail to enable those skilled in the art to practice the invention. It is to be understood that the various embodiments of the present invention, although different, are not necessarily mutually exclusive. For example, a particular feature, structure, or characteristic described herein in connection with one embodiment may be implemented within other embodiments without departing from the scope of the present invention. In addition, it is to be understood that the position or arrangement of individual elements within each disclosed embodiment may be modified without departing from the scope of the present invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

As described with reference to FIG. 1, a dual-interface smartcard 100 typically consists of several layers of plastic foils that are laminated on top of each other, forming the card body 9. An antenna 7 and a chip module 6 are embedded within the card body.

For integrated-circuit cards the size and the position of the microchip is normed in ISO 7816. Notably, the chip is positioned on the left-side of the card, when viewing the card from the front.

Although there are some variations in the antenna size and the winding geometry, antennas within dual-interface smartcards are about 80 mm wide and 50 mm tall, spanning across the whole card. For credit and debit cards, the antenna may be located in the upper or lower part of the card spanning across the whole longitudinal direction of the card.

Therefore, although integrated-circuit cards are made almost 90% of plastic, there are several mixed materials (such as, copper, gold, chip, etc.) spread out over different parts of the card, which are very difficult to separate for recycling.

Embodiments of the present invention aims at providing solutions for placing an antenna close to the chip module on an integrated-circuit card, to minimize the area with mixed materials and hence to facilitate environment-friendly recycling.

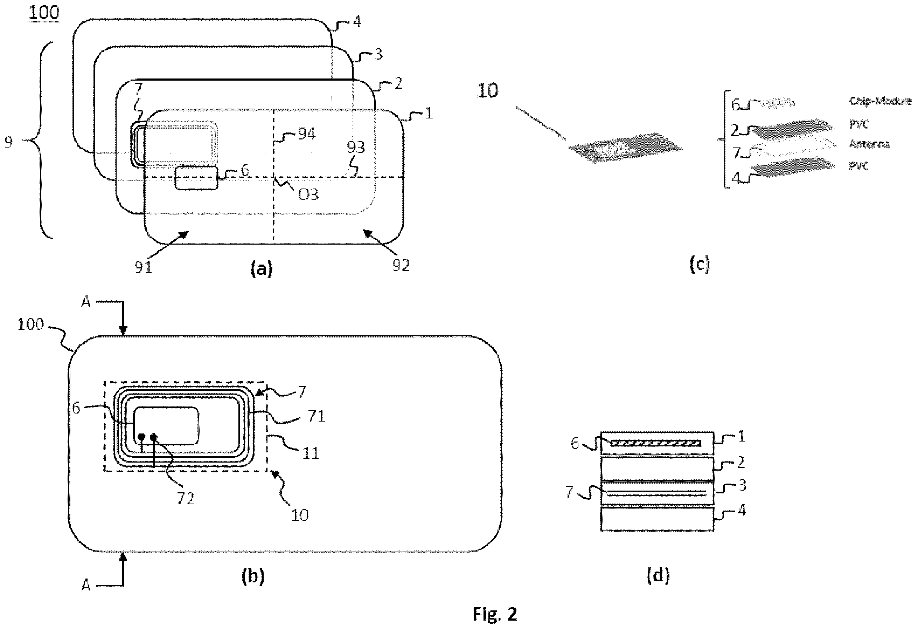

FIG. 2 shows several views of an integrated-circuit card 100, according to an embodiment of the invention.

Notably, FIG. 2a is a schematic and exploded depiction in perspective of the card 100. The card 100, which may be realized as a dual interface card, may comprise a plurality of layers 1 to n (in the figure four layers, n=4, are depicted), forming the card body 9. On one of the uppermost layers from the front of the card a microchip 6 is embedded. The chip 6 may be located on the top layer 1 or alternatively on a layer underneath a top protective layer (not depicted). An antenna 7 is embedded in a layer located behind the layer containing the microchip 6. This can be the layer immediately behind the layer containing the microchip 6. With reference to FIG. 2(a), the antenna 7 is located within layer 2, while the chip 6 is located within layer 1. Alternatively, one or more intermediate layers (made of plastic) may be located between the antenna 7 and the microchip 6. The center of the integrated-circuit card 100 laying at the intersection of the longitudinal axis 93 and the transversal axis 94 is indicated by O3. Reference numerals 91 and 92 indicate the left hand side respectively the right half side of the card 100 divided by the transversal axis, when viewed from the front.

FIG. 2b is a schematic view from the front of the card showing the arrangement of the microchip 6 and antenna 7 on the integrated-circuit card 100, according to an embodiment.

The antenna 7, which comprises an antenna body 71 and two end points 72, is placed in close proximity to the microchip 6, in an area which contains the microchip 6. In one embodiment, as depicted in Fig. 2b, the antenna body 71 comprises a loop arranged around the microchip 6. The loop comprises a plurality of coils or wires. The antenna coils are made in sufficient number, with a certain width and a minimum distance between the coils to obtain the electromagnetic characteristics needed for achieving the desired resonant frequency.

In a preferred embodiment, the antenna loop comprises straight portions substantially parallel to the edges of the microchip 6, and curved portions connecting the straight portions and located around the corners of the microchip 6.

Alternatively, the antenna loop may not encircle completely the microchip, but may be arranged in a U-shape around three sides of the microchip.

Each of these antenna placements are characterized by a symmetric arrangement of the antenna in close proximity to the chip. The symmetric arrangement improves the surface current and the magnetic field detected or generated by the antenna.

Two end points 72 are configured as antenna pads for connecting with the microchip 6. The antenna is preferably made of copper wire. Other materials with conductive characteristics can be used as well. In an alternative embodiment, the antenna may be realized as a printed-circuit-board antenna.

An area 10 of the integrated-circuit card 100 comprising the microchip 6 and the antenna 7 is indicated by the dashed line 10.

FIG. 2c is a schematic and exploded depiction in perspective of the card area 10 comprising the microchip and antenna according to an embodiment of the invention, while FIG. 2d shows the area 10 in a side view perpendicular to the viewing line A-A of the integrated-circuit card of FIG. 2b according to an embodiment of the invention.

With reference to FIG. 2c and FIG. 2d the antenna 7 is placed behind the chip 6 within the area 10. In this embodiment, an intermediate layer made of plastic, layer 2, is placed between the layer 1 carrying the chip 6 and the layer 3 carrying the antenna 7.

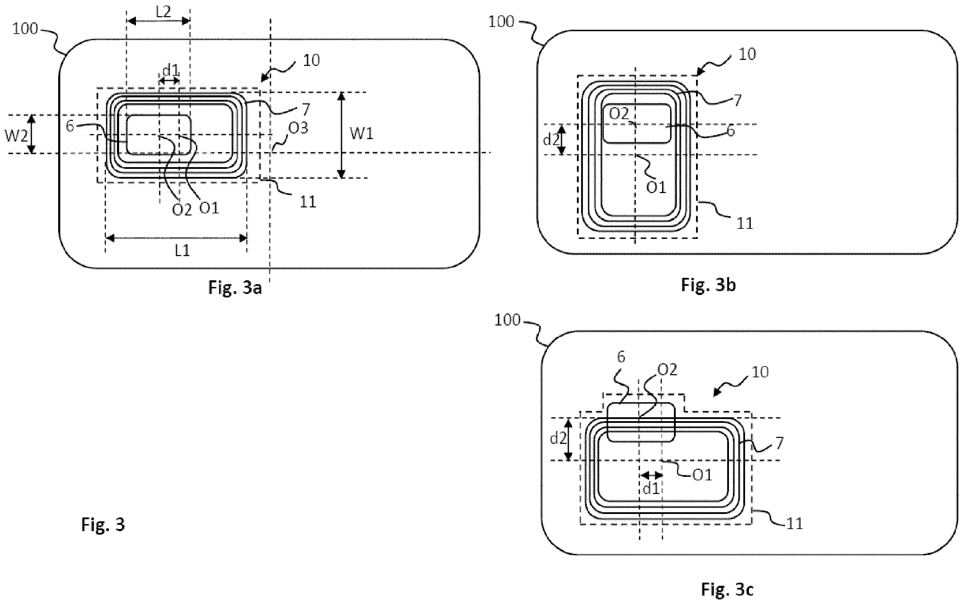

FIG. 3 shows various arrangements of the microchip and antenna on an integrated-circuit card in a schematic view, according to embodiments of the invention.

In particular, in a preferred embodiment according to FIG. 3a, the antenna 7 is placed in close proximity to the chip 6, in a longitudinal arrangement. Such a close arrangement of the antenna and the microchip may be realized by miniaturizing and placing the antenna in a way that a center O1 of the antenna 7 (respectively antenna body 71) is located within an area of the integrated circuit card occupied by the microchip.

The center O1 of the antenna 7 may be located within a distance d1 from a center O2 of the microchip 6, d1 being measured in the longitudinal direction of the card body 9.

Preferably, d1 is less than half of a length of the microchip 6, that is, the center of the antenna falls within the surface of the microchip 6. In a preferred embodiment the center O1 of the antenna is on the right side of the chip-module, that is, towards the middle of the card body, as depicted in FIG. 3c. This arrangement allows to use a larger antenna while still keeping the area of mixed materials on the card body small.

In a further embodiment, the antenna may be placed in a transversal arrangement with respect to the microchip, as depicted in FIG. 3b. With this arrangement, the center O1 of the antenna is located in a transversal direction within a distance d2 from the center O2 of the microchip 6. Preferably, d2 is smaller than half of the width W1 of the card body 9.

Preferably, an antenna with dimensions slightly larger than the dimensions of the microchip may provide acceptable results in terms of RF performance.

In particular, the dimensions of the antenna, that is, the length L1 and the width W1, relative to the dimensions of the microchip, that is, length L2 and width W2, may be defined by the formula (1) as:

$$L2 \leq L1 \leq k \times L2 \text{ and } W2 \leq W1 \leq k \times W2 \qquad (1)$$

wherein k is a rational number. Preferably, k is $1 < k \leq 2$.

In a preferred embodiment, the antenna 7 has a length L of 3 cm and a width W of 1.5 cm (L1 and W1 in FIG. 3). This antenna size provides good RF performance.

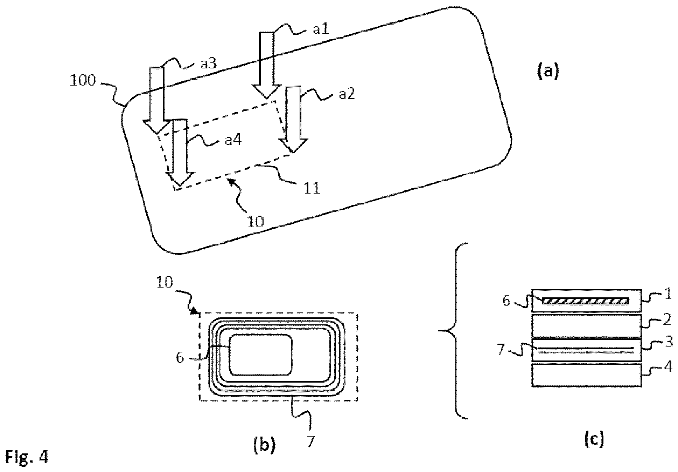

FIG. 4. is a schematic view illustrating the removal of the card area containing the antenna and the microchip from the integrated-circuit card, according to an embodiment of the invention.

The area 10, which contains mixed materials of the microchip 6 and the antenna 7, is detachable from the card body 9, and can entirely be removed from the card 100. Preferably, a marking, such as the marking line 11 is used to delimitate the area 10 from the remaining part of the card body 9. The marking line 11 can be visible from the top or bottom of the card to indicate the removable area within the card body. Alternatively, or in addition to being visible on the card, the marking line may be realized as a structural break-off line through at least one layer of the card body. The marking line 11 may have a rectangular form around the antenna and the microchip, or may closely follow the outline of the microchip 6 and antenna 7, as depicted in FIG. 3c.

The area 10 can be removed by pressing with the thumb or punching with a punching tool as indicated by the arrows a1, a2, a3, and a4 in FIG. 4a.

The removed area 10 contains the microchip 6 and the antenna 7 (c.f., FIG. 4b) as well as only a small amount of plastic (c.f., FIG. 4c, the part of the card body layers, the chip and antenna are embedded within).

By removing the entire area 10 form the card body 9, both the chip and the antenna and thus all non-plastic components can be easily separated from the rest of the card body entirely made of plastic, allowing the remaining card body to be recycled.

Manufacturing an integrated-circuit card embedded with a microchip and an antenna as described above, does not require changes in the conventional production setups. The PVC layers are laminated together with the antenna and the chip, or the chip is added after lamination to the laminated card body embedded with the antenna.

During manufacturing, however, in contrast to conventional production steps, the antenna, respectively a carrier substrate comprising the antenna, is placed within a first area of the card body, the first area being defined by a second area of the card body containing the microchip. In particular, the antenna respectively the carrier substrate is laminated together with a plurality of layers, to form the card body, wherein the carrier substrate is embedded within a first area of the card body. The microchip is attached to the card body within a second area of the card body, wherein the first area and the second area are on a same half side selected from a first half side and a second half side separated by a transversal axis of the integrated-circuit card..

During manufacturing other arrangements of the antenna can be obtained, for instance by placing the antenna within a first area transversal to the microchip, to obtain the card depicted in FIG. 3b, or by placing the antenna within a first area with both a longitudinal and transversal displacement with respect to the microchip, to obtain the card depicted in FIG. 3c.

In the foregoing specification, the invention has been described with reference to specific embodiments thereof. It will, however, be evident that various modifications and changes may be made thereto without departing from the broader scope of the invention. For example, the above-described process flows are described with reference to a particular ordering of process actions. However, the ordering of many of the described process actions may be changed without affecting the scope or operation of the invention. The specification and drawings are, accordingly, to be regarded in an illustrative rather than restrictive sense.

**Claims**

1. An integrated-circuit card (100) comprising:

   - a plurality of layers (1-5), forming a card body (9), the card body (9) having a first half side (91) and a second half side (92) separated by a transversal axis (94);
   - an antenna (7) having an antenna body (71) and two end points (72), the antenna (7) being embedded within the card body (9); and
   - a microchip (6) embedded within one of the plurality of layers (1-5) and connected to the antenna (7) through the two end points (72);
   - wherein the microchip (6) and the antenna (7) are located within the same half side (91) of the integrated-circuit card (100).

2. The integrated-circuit card (100) according to claim 1, wherein a center O1 of the antenna (7) is located within a distance d1 from a center, O2, of the microchip (6), d1 being measured in the longitudinal direction of the card body (9), wherein d1 is smaller than half of a distance between the center O2 of the microchip (6) and a center O3 of the card body (9).

3. The integrated-circuit card (100) according to claim 2, wherein the center O1 of the antenna (7) is located on the right side of the microchip (6) towards the middle of the card body (9).

4. The integrated-circuit card (100) according to any one of claims 1 to 3, wherein the center O1 of the antenna (7) is located in a transversal direction within a distance d2 from the center O2 of the microchip (6), wherein d2 is smaller than half of the width of the card body (9).

5. The integrated-circuit card (100) according to claim 4, wherein d2 is less than half of a width of the microchip (6).

6. The integrated-circuit card (100) according to any one of claims 1 to 5, wherein the antenna (7) has a length L1 and a width W1, wherein L1 and W1 are between a length L2 respectively a width W2 of the microchip (6) and the length respectively the width of the microchip multiplied by a factor k, that is, $L2 \leq L1 \leq k{\times}L2$ and $W2 \leq W1 \leq kx\ W2$, preferably k being a rational number $1 < k \leq 2$.

7. The integrated-circuit card (100) according to any one of claims 1 to 6, wherein the antenna has a length L1 of 30 mm and a width W1 of 15 mm.

8. The integrated-circuit card (100) according to any one of claims 1 to 7, wherein the microchip (6) is embedded within one of the upper layers of the card (100), and the antenna (7) is embedded within a layer of the card (100) behind the layer containing the microchip (6).

9. The integrated-circuit card (100) according to any one of claims 1 to 8, wherein the antenna body (71) comprises a loop arranged around the microchip (6) and comprising a plurality of coils.

10. The integrated-circuit card (100) according to any one of claims 1 to 9, wherein the antenna loop comprises straight portions substantially parallel to edges of the microchip, and curved portions connecting the straight portions and located around corners of the microchip (6).

11. The integrated-circuit card (100) according to any one of claims 1 to 10, wherein the antenna is made of copper wire.

12. The integrated-circuit card (100) according to any one of claims 1 to 11, wherein the antenna is a printed-circuit-board antenna.

13. The integrated-circuit card (100) according to any one of claims 1 to 12, wherein the card body (9) comprises a marking (11) located around an area (10) of the card body (9) that comprises the microchip (6) and the antenna (7), the area (10) being detachable from the remaining surface of the integrated-circuit card (100) along the marking (11)

14. The integrated-circuit card (100) according to any one of claims 1 to 13, wherein the marking (11) is realized as a structural break-off line through at least one layer of the card body (9).

15. A method for manufacturing an integrated-circuit card (100) embedded with a microchip (6) and an antenna (7), the method comprising the steps:

- laminating a plurality of layers (1-5) together with an antenna carrier substrate comprising the antenna (7), to form a card body (9), wherein the carrier substrate is embedded within a first area of the card body (9); and
- attaching the microchip (6) to the card body (9) within a second area of the card body (9);
- wherein the first area and the second area are on a same half side selected from a first half side (91) and a second half side (92) separated by a transversal axis (94) of the integrated-circuit card (100).

100

5
4
3
2
1
9

7
6

Fig. 1

Fig. 2

Fig. 3b

Fig. 3c

Fig. 3a

Fig. 3

Fig. 4

**EP 4 357 970 A1**

Europäisches Patentamt
European Patent Office
Office européen des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/203172 A1 (BERARDI MICHAEL J [US] ET AL) 28 August 2008 (2008-08-28) * paragraphs [0063], [0145]; figure 15A * | 1-15 | INV. G06K19/077 |
| X | US 2007/267506 A1 (BASHAN ODED [IL] ET AL) 22 November 2007 (2007-11-22) * paragraphs [0048], [0049]; figures 2,4a * | 1-15 | |
| X | US 6 378 774 B1 (EMORI SUSUMU [JP] ET AL) 30 April 2002 (2002-04-30) * figure 3 * | 1-15 | |
| X | EP 1 076 316 A2 (EASTMAN KODAK CO [US]) 14 February 2001 (2001-02-14) * paragraphs [0024], [0025], [0038], [0039]; figure 1 * | 1-15 | |
| X | US 2019/171923 A1 (FINN DAVID [IE]) 6 June 2019 (2019-06-06) * paragraph [0304]; figures 1,2,5 * | 1 | |
| X | DE 102 58 670 A1 (GIESECKE & DEVRIENT GMBH [DE]) 24 June 2004 (2004-06-24) * figure 3 * | 1 | TECHNICAL FIELDS SEARCHED (IPC) G06K |

The present search report has been drawn up for all claims

| Place of search | Date of completion of the search | Examiner |
|---|---|---|
| Munich | 15 March 2023 | Heusler, Nikolaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 38 2997

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2023

| Patent document cited in search report | | | Publication date | Patent family member(s) | | | Publication date |
|---|---|---|---|---|---|---|---|
| US 2008203172 | A1 | | 28-08-2008 | AU | 2003287337 | A1 | 03-06-2004 |
| | | | | TW | I240209 | B | 21-09-2005 |
| | | | | US | 2004118930 | A1 | 24-06-2004 |
| | | | | US | 2008203172 | A1 | 28-08-2008 |
| | | | | WO | 2004044825 | A1 | 27-05-2004 |
| US 2007267506 | A1 | | 22-11-2007 | EP | 2019997 | A1 | 04-02-2009 |
| | | | | US | 2007267506 | A1 | 22-11-2007 |
| | | | | WO | 2007135658 | A1 | 29-11-2007 |
| | | | | ZA | 200700427 | B | 27-05-2009 |
| US 6378774 | B1 | | 30-04-2002 | CN | 1278936 | A | 03-01-2001 |
| | | | | DE | 69831592 | T2 | 22-06-2006 |
| | | | | EP | 1031939 | A1 | 30-08-2000 |
| | | | | US | 6378774 | B1 | 30-04-2002 |
| | | | | WO | 9926195 | A1 | 27-05-1999 |
| EP 1076316 | A2 | | 14-02-2001 | EP | 1076316 | A2 | 14-02-2001 |
| | | | | JP | 2001143026 | A | 25-05-2001 |
| | | | | US | 6381418 | B1 | 30-04-2002 |
| US 2019171923 | A1 | | 06-06-2019 | NONE | | | |
| DE 10258670 | A1 | | 24-06-2004 | AT | 479961 | T | 15-09-2010 |
| | | | | AU | 2003289996 | A1 | 09-07-2004 |
| | | | | DE | 10258670 | A1 | 24-06-2004 |
| | | | | EP | 1573662 | A1 | 14-09-2005 |
| | | | | WO | 2004055721 | A1 | 01-07-2004 |

EPO FORM P0459

For more details about this annex : see Official Journal of the European Patent Office, No. 12/82